# EUROPEAN PATENT APPLICATION

(11) **EP 1 494 331 A2**
(43) Date of publication of application: **05.01.2005**
(21) Application number: 04076882.2
(22) Date of filing: 29.06.2004
(51) Int. Cl.: H02J 3/00

(54) **Aircraft secondary electric load controlling system**

(30) Priority: 30.06.2003 US 604189
(71) Applicant: The Boeing Company, Seattle, Washington 98124-2207 (US)
(72) Inventor: Bouwman, Michael D., Bellevue, Washington 98008 (US); Nozari, Farhard, Woodinville, Washington 98072 (US); Currier, Thomas F., Lynnwood, Washington 98037 (US)
(74) Representative: Land, Addick Adrianus Gosling

(57) **Abstract**

A method of controlling electrical load power consumption during operation of an aircraft (12) includes determining current operating conditions of the aircraft (12). An engine secondary power extraction limit is determined in response to the current operating conditions. Engine secondary power extraction is determined. Multiple secondary loads (18) are operated in response to the engine secondary power extraction limit and the engine secondary power extraction.

## Description

### TECHNICAL FIELD

The present invention relates to electrical systems and loads of an aircraft. More particularly, the present invention is related to a system and method of controlling secondary electrical load power consumption during operation of an aircraft.

### BACKGROUND OF THE INVENTION

An aircraft contains an abundant amount of electrical devices and systems that perform various tasks throughout the aircraft. Some of these tasks are related to and include lighting, electronic controls, motors, pumps, air-conditioning systems and controls, and hydraulic loads. The number of electrical devices and systems and corresponding loads contained therein are ever increasing to satisfy new user and vehicle electrical power requirements.

Current electrical loads of an aircraft are managed based on power limitations of an engine generator or of an auxiliary power unit. An aircraft engine typically has an associated engine core secondary horsepower rating, which refers to horsepower extraction capability of that engine. The horsepower that may be extracted from the engine can be applied and converted into electrical energy for use by the electrical loads. Each engine is typically certified for use having an associated maximum generator load output. When designing an aircraft, maximum electrical load consumption requirements are determined and an engine having a certified maximum generator load output level that is greater than or equal to that of the maximum electrical load requirements is utilized.

Aircraft engines are currently designed and selected for a particular application by maximizing generator capability, such that electrical load consumption is within the engine core secondary horsepower extraction capability of that engine. By maximizing generator capability, power consumption of electrical loads does not significantly affect engine operation. When engine operation is significantly affected, the aircraft may become unstable and various devices having a high priority level may operate inappropriately and potentially cause damage to the aircraft or injury to an occupant therein.

Unfortunately, due to the ever-increasing number of electrical devices and systems, the existing technique for determining an appropriate engine with a desired generator output power rating is no longer suitable. The existing technique does not satisfy other aircraft design requirements, such as that of size, weight, complexity, fuel consumption, and related costs involved therein. For example, in order to satisfy increasing electrical load requirements an aircraft may require a particular generator with a high level of power output capability that requires a high level of power from an aircraft engine, which exceeds secondary power limitations of a desired engine. The desired engine being one that satisfies some or all of the other above-mentioned design requirements. Thus, in order to satisfy the increased power requirements, increased generator power demands, and to not significantly affect engine performance, engine size needs to be increased to such an extent that the engine is no longer application feasible.

Additionally, it is desirable that secondary power limitations of an engine are not exceeded. When secondary power limitations are exceeded power systems of an aircraft that are of a high priority, such as systems that provide maneuvering, acceleration, and deceleration capability, as well as fuel systems and hydraulic systems, may not operate appropriately. For example, when secondary power limitations are exceeded, power that is being used by lower priority secondary loads may be needed to operate an engine compressor for adequate supply of compressed air for internal turbine combustion. Lack of power for the engine compressor can cause the engine turbines to operate inappropriately and negatively effecting engine performance. Also, in exceeding secondary power limitations the engine is no longer operating efficiently, since it is working harder to supply additional power and, as a result, is consuming an increased amount of fuel.

It is therefore desirable to provide a system and method of operating an aircraft such that electrical loading is satisfied without the above-stated associated disadvantages. It is also desirable for the system to maximize engine efficiency and minimize fuel consumption.

### SUMMARY OF THE INVENTION

The present invention provides a system and method of controlling secondary electrical load power consumption during operation of an aircraft. The method includes determining current operating conditions of the aircraft. An engine secondary power extraction limit is determined in response to the current operating conditions. Engine secondary power extraction is determined. Multiple secondary loads are operated in response to the engine secondary power extraction limit and the engine secondary power extraction.

One of several advantages of the present invention is that it provides a method for operating secondary electrical loads in response to an engine secondary power extraction limit and current operating conditions of an aircraft. In general, power supplied to the secondary loads is limited by the total engine power output rather than by the engine core secondary power extraction capability. In so doing, the present invention allows an aircraft to be designed to include direct power secondary electrical loads that have a combined rated total power consumption level that is greater than that of rated maximum secondary power extraction of an aircraft engine. Thus, the present invention allows an engine to supply an increased amount of electrical power and satisfy electrical power consumption requirements for an increased number of secondary electrical loads during certain operating conditions.

Another advantage of the present invention is that it allows for efficient use of power extracted from an aircraft engine, thereby providing an increased level of electrical power that may be extracted from a particular engine that has an associated secondary output power rating level.

Furthermore, the present invention provides an efficient power management system that minimizes fuel consumption by allowing a smaller engine to be utilized to satisfy secondary output power requirements.

Moreover, the present invention provides improved range of an aircraft and allows for increased payload due to a decrease in size and weight of utilized engines and cost involved in operation thereof.

The present invention itself, together with attendant advantages, will be best understood by reference to the following detailed description, taken in conjunction with the accompanying figures.

### BRIEF DESCRIPTION OF THE DRAWINGS

For a more complete understanding of this invention reference should now be had to the embodiments illustrated in greater detail in the accompanying figures and described below by way of examples of the invention wherein:
Figure 1 is a block diagrammatic view of a secondary electrical load power management system for an aircraft in accordance with an embodiment of the present invention;
Figure 2 is a logic flow diagram illustrating a method of controlling electrical load power consumption during operation of an aircraft in accordance with an embodiment of the present invention; and
Figure 3 is a management control diagram with a corresponding power management plot in accordance with an embodiment of the present invention.

### DETAILED DESCRIPTION

While the present invention is described with respect to a secondary electrical load power management system for an aircraft, the present invention may be adapted and applied to various systems including: vehicle systems, aircraft systems, power distribution systems, or other similar systems known in the art.

In the following description, various operating parameters and components are described for multiple constructed embodiments. These specific parameters and components are included as examples and are not meant to be limiting.

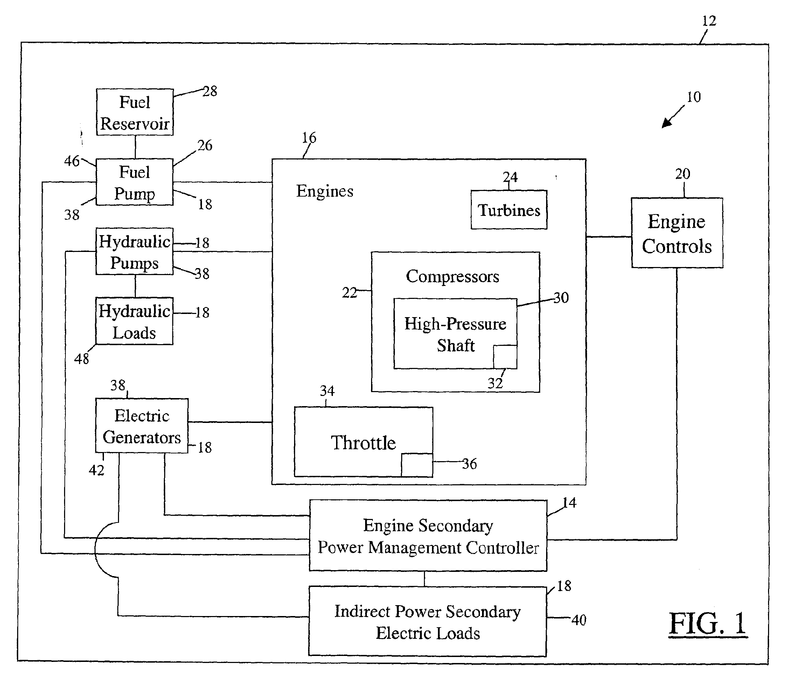

Referring now to Figure 1, a block diagrammatic view of a secondary electrical load power management system 10 for an aircraft 12 in accordance with an embodiment of the present invention is shown. The management system 10 includes an engine secondary power management controller 14 that is coupled to one or more engines 16 and to multiple secondary electrical loads 18. The controller 14 prioritizes and may limit operation of the secondary loads 18 in response to current flight conditions of the aircraft 12.

The controller 14 is preferably microprocessor based such as a computer having a central processing unit, memory (RAM and/or ROM), and associated input and output buses. The controller 14 may be an application-specific integrated circuit or formed of other logic devices known in the art. The controller 14 may be a portion of a central vehicle main control unit, an interactive vehicle dynamics module, a flight controller, or may be a stand-alone controller as shown.

The engines 16 provide power for flight and maneuvering of the aircraft 12 as well as for onboard vehicle electrical and electronic devices and systems. The engines 16 have a rated total output power level, which consists of primary output power, used primarily for flight and maneuvering, and secondary output power, used primarily for the secondary loads 18. The engines 16 also have a standard engine core secondary horsepower extraction capability limit, which is referred to as the limit as to which secondary power output does not significantly affect performance of engine operation. The engines 16 are operated via engine controls 20, such as control inceptors and flight controllers (not shown). The controls 20 may be activated or adjusted by a vehicle operator or on-board controller, such as by the controller 14.

The engines 16 include one or more compressors 22 that supply compressed air for combustion with fuel in turbines 24. The fuel is pumped into the turbines 24 via a fuel pump 26 from a fuel reservoir 28. The compressors 22 are driven by a high-pressure shaft 30 that extends therethrough. A shaft sensor 32 is coupled to the controller 14 and senses rotational speed of the shaft 30. The engines 16 may have a throttle 34 or the like for adjusting flow of fuel and compressed air into the turbines 24. A throttle sensor 36 is coupled to the controller 14 and senses throttle position. The throttle position is adjusted by the engine controls 20.

The secondary electrical loads 18 include direct power secondary loads 38 and indirect power secondary loads 40. The direct loads 38 receive electrical power directly from the engines 16, whereas the indirect loads 40 receive power from the engines 16 via one of the direct loads 38, such as generators 42.

The direct loads 38 may include the generators 42 and multiple pumps, such as hydraulic pumps 44 and fuel pump 46. The generators 42 may be in the form of auxiliary power units and may have a power rating that exceeds that of the standard engine core secondary horsepower extraction capability of the engines 16. The hydraulic pumps 44 may be used for hydraulic loads 48, such as for raising and lowering landing gear, adjusting flaps, slats, ailerons, or other leading or trailing edge devices (not shown), or for other equipment or systems that are hydraulically actuated.

The indirect loads 40 include electrical devices and systems that may receive electrical power from a generator, such as lights, computer systems, navigation controls, air-conditioning systems, telecommunication systems, and various other electrical devices and systems known in the art.

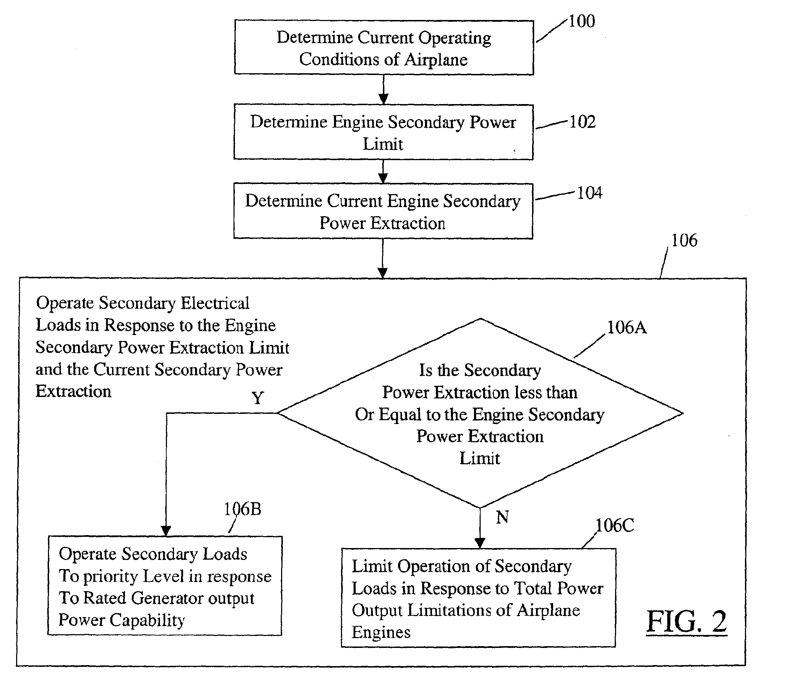

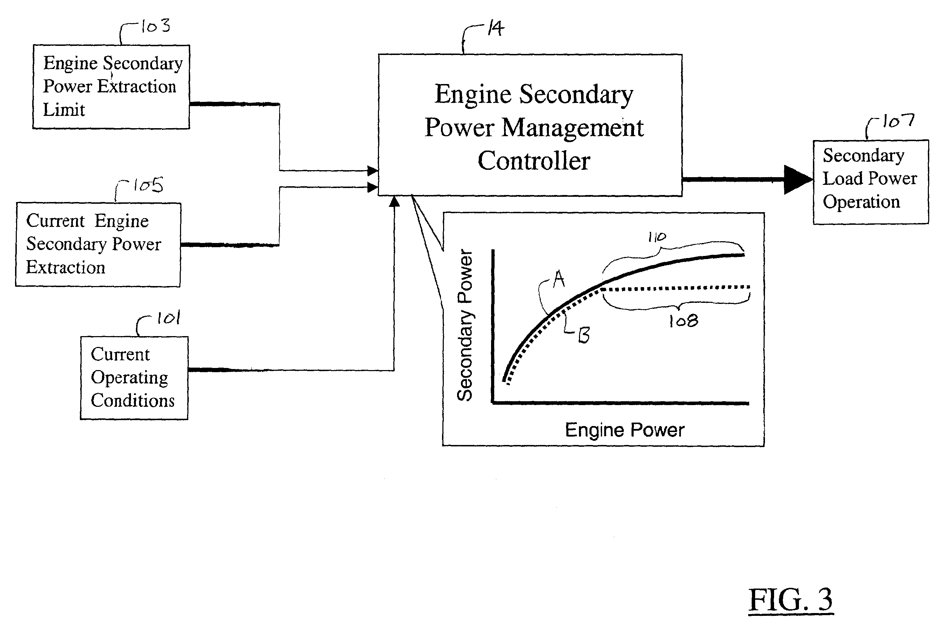

Referring now to Figures 2 and 3, a logic flow diagram illustrating a method of controlling electrical load power consumption during operation of the aircraft 12 and a management control diagram with corresponding power management plot, are shown.

In step 100, the controller 14 determines current operating conditions of the aircraft 12, via one or more aircraft flight condition sensors, such as sensors 32 and 36. In determining the current operating conditions, the controller 14 determines engine primary power extraction. Primary power extraction is determined using an engine rotational speed sensor, such as the shaft sensor 32, using the throttle sensor 36, or by using some other suitable sensor or control device known in the art. The current operating conditions are represented by box 101.

In step 102, an engine secondary power extraction limit is determined in response to the current operating conditions. Total output power availability of the engines 16 is assessed in response to determining the primary power extraction. The engine secondary power extraction limit is determined to be approximately equal to the remainder of total output power after supplying power for primary power extraction. The engine secondary power extraction limit is represented by box 103.

In step 104, the controller 14 determines current engine secondary power extraction from the direct loads 38 and determines available power for the indirect loads 40. For example, power needed for the pumps 44 and 46 may be subtracted from the engine secondary power extraction limit to determine the power available for the indirect loads 40. Current engine secondary power extraction is represented by box 105.

In step 106, the controller 14 operates the secondary loads 18 in response to the engine secondary power extraction limit and the current engine secondary power extraction. The secondary load power operation is also represented by box 107.

The standard engine core secondary horsepower extraction capability of the engines 16 may be exceeded to provide additional power to various electrical loads when the primary power extraction is below a predetermined limit. In other words, when the aircraft 12 is operating in conditions such that there is a minimal amount of primary power extraction, engine power output capability that may not have been normally utilized for secondary loads may be supplied to the indirect loads 40. As such, the controller 14 increases the engine secondary power extraction limit to be greater than the standard engine core secondary horsepower extraction capability level. In so doing, the secondary output power to the indirect loads 40 is increased as long as engine performance as well as other flight systems and components that are of a high level of priority, such as devices that enable or provide safe flight, are not affected by an increase in secondary power consumption.

In step 106A, the controller determines whether the engine secondary power extraction is less than or equal to the engine secondary power extraction limit. Maximum engine power is represented by curve A and secondary extracted power is represented by curve B.

In step 106B, the controller 14 operates the secondary loads 18 according to the priority level of each device when the engine secondary power extraction is less than or equal to the engine secondary power extraction limit. For example, onboard passenger cabin video monitors have a lower priority level as compared to that of navigation or flight controls. Operation of the indirect loads 40 is limited by power output limitations of the generators 42, as opposed to the standard engine core secondary horsepower extraction capability of the engines 16, as with that of prior electrical control systems. The secondary load power supplied in step 106B is represented by portion 108 of curve B.

In step 106C, the controller 14 limits operation of the secondary loads 18 when the engine secondary power extraction is greater than the engine secondary power extraction limit. The secondary loads 18 are limited so that engine secondary power extraction does not exceed the engine secondary power extraction limit. The secondary loads 18 are limited by total power output limitations of the engines 16, again as opposed to the standard engine core secondary horsepower extraction capability of the engines 16. The secondary load power supplied in step 106C is represented by portion 110 of curve A.

In both step 106B and 106C, electrical needs of the indirect loads 40 are satisfied in response to priority level and power requirements of each indirect load 40. For example, a first indirect load may have a higher priority level than a second indirect load, but the second indirect load may require less power and thus may be supplied power rather than the first indirect load.

The above-described steps are meant to be illustrative examples; the steps may be performed sequentially, synchronously, simultaneously, or in a different order depending upon the application.

The present invention provides secondary electrical load power management system for an aircraft that provides additional power to secondary electrical loads above that of a standard engine core secondary horsepower extraction capability limit. The present invention satisfies an increased level of power consumption requirements from implementation of additional electrical devices and systems. The present invention in so doing increases efficient use of engine power to allow a smaller than normal aircraft engine to be utilized that satisfies flight performance requirements, but is smaller in size and is lighter in weight, and yet satisfies requirements for an increased level of secondary output power availability. Also, through use of a smaller engine fuel consumption is minimized and travel range is increased.

While the invention has been described in connection with one or more embodiments, it is to be understood that the specific mechanisms and techniques which have been described are merely illustrative of the principles of the invention, numerous modifications may be made to the methods and apparatus described without departing from the spirit and scope of the invention as defined by the appended claims.

## Claims

1. A secondary electrical load power management system for an aircraft comprising:
a plurality of secondary electrical loads;
at least one aircraft flight condition sensor; and
a controller coupled to said plurality of secondary electrical loads and to said at least one aircraft flight condition sensor and determining engine secondary power extraction and current operating conditions of said aircraft, determining a engine secondary power extraction limit in response to said current operating conditions, and operating said plurality of secondary electrical loads in response to said engine secondary power extraction limit and said engine secondary power extraction.

2. A system as in claim 1 wherein said plurality of secondary electrical loads comprises at least one direct power secondary load and at least one indirect power secondary load.

3. A system as in claim 2 wherein said at least one direct power secondary load comprises at least one generator or pump.

4. A system as in claim 1, 2 or 3 wherein said controller in determining current operating conditions determines engine primary power extraction.

5. A system as in claim 4 wherein said controller in determining said engine primary power extraction determines at least one of engine speed, engine throttle, and high pressure shaft speed.

6. A system as in any of claims 1-5 wherein said controller in determining engine secondary power extraction determines power extraction from at least one direct power secondary load selected from at least one of a generator and a pump.

7. A system as in any of claims 1-6 wherein said controller operates said plurality of secondary electrical loads in priority when said engine secondary power extraction is less than or equal to approximately said engine secondary power extraction limit.

8. A system as in claim 7 wherein operating said plurality of secondary electrical loads in priority comprises operating a plurality of indirect power secondary loads in response to output limitations of at least one direct power secondary load.

9. A system as in any of claims 1-8 wherein said controller limits operation of said plurality of secondary electrical loads when said engine secondary power extraction is greater than said engine secondary power extraction limit.

10. A system as in claim 9 wherein said controller in limiting operation of said plurality of secondary electrical loads prevents said engine secondary power extraction from exceeding said engine secondary power extraction limit.

11. A method of controlling electrical load power consumption during operation of an aircraft comprising:
determining current operating conditions of the aircraft;
determining an engine secondary power extraction limit in response to said current operating conditions;
determining engine secondary power extraction; and
operating a plurality of secondary loads in response to said engine secondary power extraction limit and said engine secondary power extraction.

12. A method as in claim 10 wherein determining current operating conditions comprises determining engine primary power extraction.

13. A method as in claim 11 or 12 wherein in determining engine primary power extraction comprises determining at least one of engine speed, engine throttle, and high pressure shaft speed.

14. A method as in claim 11, 12 or 13 wherein determining engine secondary power extraction comprises determining power extraction from at least one direct power secondary load selected from at least one of a generator and a pump.

15. A method as in any of claims 11-14 wherein operating said plurality of secondary loads comprises operating said plurality of secondary loads in priority when said engine secondary power extraction is less than or equal to approximately said engine secondary power extraction limit.

16. A method as in claim 15 wherein operating said plurality of secondary loads comprises operating a plurality of indirect power secondary loads in response to output limitations of at least one direct power secondary load.

17. A method as in any of claims 11-16 wherein operating said plurality of secondary loads comprises limiting operation of said plurality of secondary loads when said engine secondary power extraction is greater than said engine secondary power extraction limit.

18. A method as in claim 17 wherein operation of said plurality of secondary loads is limited so that said engine secondary power extraction does not exceed said engine secondary power extraction limit.

19. A method as in claim 17 or 18 wherein operation of said plurality of secondary loads are limited in response to engine output power capability.

20. A method as in any of claims 11-19, comprising:
operating said plurality of secondary loads in priority when said engine secondary power extraction is less than said engine secondary power extraction limit; and
limiting operation of said plurality of secondary loads when said engine secondary power extraction is greater than said engine secondary power extraction limit.

21. A system according to any of claims 1-10 wherein a method according to any of claims 11-20 is used.
